# EUROPÄISCHE PATENTANMELDUNG

(11) **EP 0 566 533 A1**
(43) Veröffentlichungstag der Anmeldung: **20.10.1993**
(21) Anmeldenummer: 93810244.9
(22) Anmeldetag: 06.04.1993
(51) Int. Cl.: C08F 8/36, H01B 1/12

(54) **Sulfatierte Polyvinylphenole, Zusammensetzung mit sulfatierten Polyvinylphenolen und deren Verwendung**

(30) Priorität: 15.04.1992 CH 1245/92
(71) Anmelder: CIBA-GEIGY AG, CH-4002 Basel (CH)
(72) Erfinder: Ohwa, Masaki, Dr., Kobe-shi, Hyogo-ken 657 (JP); Finter, Jürgen, Dr., W-7800 Freiburg (DE); Wernet, Wolfgang, Dr., Kobe-shi, Hyogo-ken, 657 (JP)

(57) **Zusammenfassung**

Polymere mit, bezogen auf das Polymer, 5 bis 100 Mol-% gleichen oder verschiedenen Struktureinheiten der Formel I, 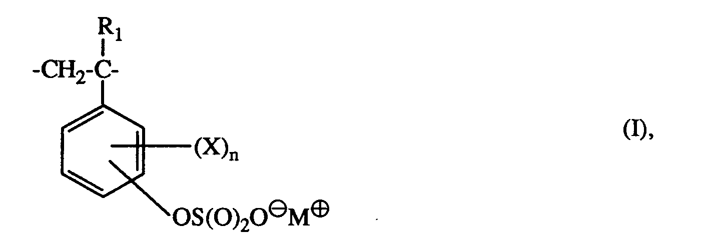
und 0 bis 95 Mol-% gleichen oder verschiedenen Strukureinheiten der Formel II, -Z- (II),
worin n für 0 oder die Zahlen 1 oder 2 steht, R₁ H oder Methyl bedeutet, M⊕ für H⊕, ein Alkalimetallkation oder ein Ammoniumkation steht, X C₁-C₄-Alkyl, C₁-C₄-Alkoxy, CI oder Br darstellt, und Z einen von (I) verschiedenen Rest eines Olefinmonomeren darstellt.

Die Polymeren können als Polyanionen in elektrisch leitenden Zusammensetzungen mit Polykationen aus Anilinen oder Heteroaromaten wie zum Beispiel Pyrrol dienen, die als Füllstoffe für Kunststoffe oder als Elektroden verwendet werden können.

## Beschreibung

Die vorliegende Erfindung betrifft sulfatierte homo- und copolymere Polyvinylphenole, eine elektrisch leitende Zusammensetzung mit kationischen Polyheteroaromaten oder Polyanilinen und anionischen sulfatierten Polyvinylphenolen, und deren Verwendung als elektrische Leiter.

In der GB-A-2 124 635 werden elektrisch leitende Zusammensetzungen aus zum Beispiel Polypyrrol und polymeren Sulfonaten als Polyanion beschrieben. Diese Zusammensetzungen weisen für viele Anwendungen unzureichende mechanische Eigenschaften auf und auch die elektrischen Leitfähigkeiten werden als zu niedrig empfunden.

In der US-A-5 061 401 werden ähnliche Zusammensetzungen mit polymeren Sulfaten als Polyanion beschrieben, die auf Grund ihrer hervorragenden mechanischen Eigenschaften thermoplastisch verformbar sind und gute elektrische Eigenschaften aufweisen. Zusammensetzungen mit polymeren Anionen von sulfatierten Polyvinylphenolen sind nicht erwähnt.

Ein Gegenstand der Erfindung sind Polymere mit, bezogen auf das Polymer, 5 bis 100 Mol-% gleichen oder verschiedenen Struktureinheiten der Formel I, 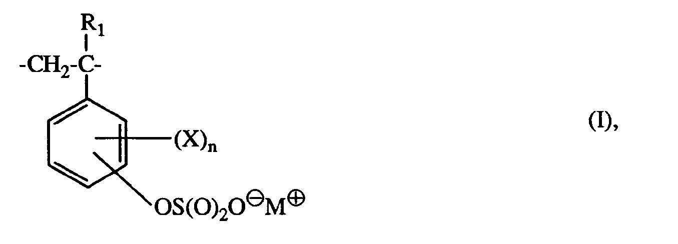
und 0 bis 95 Mol-% gleichen oder verschiedenen Struktureinheiten der Formel II, 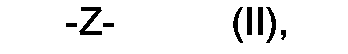 worin n für 0 oder die Zahlen 1 oder 2 steht, R₁ H oder Methyl bedeutet, M⊕ für H⊕, ein Alkalimetallkation oder ein Ammoniumkation steht, X C₁-C₄-Alkyl, C₁-C₄-Alkoxy, CI oder Br darstellt, und Z einen von (I) verschiedenen Rest eines Olefinmonomeren darstellt.

Die Gruppe -OS(O)₂O⊖M⊕ ist bevorzugt in Parastellung zur-CH₂-CR₁-Gruppe gebunden

Bei den erfindungsgemässen Polymeren handelt es sich um thermoplastische und filmbildende Polymere, die vorzugsweise eine Glasumwandlungstemperatur von -100 bis 350°C, besonders bevorzugt -50 bis 250°C aufweisen, gemessen nach der DSC-Methode Differential-Scannning-galorimetry).

Die Zugfestigkeit dieses thermoplastischen Polymeren beträgt bevorzugt mindestens 5 MPa, besonders bevorzugt mindestens 10 MPa, gemessen nach DIN 53 455. Die Zugfestigkeit kann je nach Art der Polymeren bis zu 1000 MPa, bevorzugt bis zu 500 MPa und insbesondere bevorzugt bis zu 300 MPa betragen. Der Polymerisationsgrad kann z.B. 5 bis 10000, bevorzugt 10 bis 5000 und insbesondere bevorzugt 10 bis 1000 betragen.

Das erfindungsgemässe Polymer enthält bevorzugt 10 bis 100 Mol-%, bevorzugter 10 bis 95 Mol-%, besonders bevorzugt 20 bis 90 Mol-%, insbesondere bevorzugt 30 bis 90 Mol-% und ganz besonders bevorzugt 50 bis 90 Mol-% Struktureinheiten der Formel und bevorzugt 90 bis 0 Mol-%, bevorzugter 90 bis 5 Mol-%, besonders bevorzugt 80 bis 10 Mol-%, insbesondere bevorzugt 70 bis 10 Mol-% und ganz besonders bevorzugt 50 bis 10 Mol-% Struktureinheiten der Formel II.

R₁ in Formel bedeutet bevorzugt H und n in Formel steht bevorzugt für 0 oder 1 und besonders bevorzugt für 0.

M⊕ steht für H, oder ein Alkalimetall- oderAmmoniumkation. Bevorzugte Alkalimetallkationen sind Li⊕, Na⊕ und K⊕. Das Ammoniumkation kann z.B. NH₄⊕, ein protoniertes, primäres, sekundäres oder tertiäres Amin, oder quaternäres Ammonium oder Pyridinium sein. Das primäre Ammonium kann 1 bis 18 C-Atome, besonders 1 bis 12 und insbesondere 1 bis 6 C-Atome, das sekundäre Ammonium 2 bis 24, besonders 2 bis 12, insbesondere 2 bis 8 C-Atome, das tertiäre Ammonium 3 bis 30, besonders 3 bis 18 und insbesondere 3 bis 12 C-Atome, und das quaternäre Ammonium 4 bis 36, besonders 4 bis 24 und insbesondere 4 bis 18 C-Atome enthalten.

Bevorzugte Polymere sind solche, worin in Formel IM⊕ Li⊕, Na⊕ oder K⊕ darstellt, oder R₇R₈R₉R₁₀N⊕ ist, worin R₇, R₈, Rg und R₁₀ unabgängig voneinander H, unsubstituiertes oder Hydroxyl-substituiertes C₁-C₁₈-Alkyl, Phenyl, (C₁-C₁₂-Alkyl)phenyl, (C₁-C₁₂-Alkyl)benzyl, C₅-C₇-Cycloalkyl, (C₁-C₁₂-Alkyl)-C₅-C₇-cycloalkyl darstellen, oder R₇ und R₈ zusammen Tetramethylen, Pentamethylen oder 3-Oxapentylen sind und Rg und R₁₀ die zuvor angegebenen Bedeutungen haben. Eine bevorzugte Ausführungsform sind Polymere, worin mindestens eines von R₇ bis R₁₀ nicht H bedeutet.

R₇ bis R₁₀ können in der Bedeutung von Alkyl linear oder verzweigt sein und bevorzugt 1 bis 12, besonders 1 bis 6 C-Atome enthalten. Beispiele sind Methyl, Ethyl, n- und i-Propyl, n-, i- und t-Butyl, Pentyl, Hexyl, Heptyl, Octyl, Nonyl, Decyl, Undecyl, Dodecyl, Tetradecyl, Hexadecyl und Octadecyl.

R₇ bis R₁₀ in der Bedeutung von Hydroxyalkyl kann linear oder verzweigt sein und enthält bevorzugt 2 bis 18, besonders 2 bis 12 und insbesondere 2 bis 6 C-Atome. Einige Beispiele sind 2-Hydroxyeth-1-yl, 1- oder 2-Hydroxy-prop-3-yl, 1-Hydroxybut-4-yl, 1-Hydroxyhex-6-yl.

Beispiele für R₇ bis R₁₀ als Alkylphenyl und Alkylbenzyl sind Methylphenyl, Dimethylphenyl, Ethylphenyl, n- oder i-Propylphenyl, n-, i- oder t-Butylphenyl, Hexylphenyl, Octylphenyl, Decylphenyl, Dodecylphenyl und entsprechend alkylierte Benzylreste.

R₇ bis R₁₀ in der Bedeutung von Cycloalkyl stellen besonders Cyclopentyl oder Cyclohexyl dar.

R₇ bis R₁₀ in der Bedeutung von Alkylcycloalkyl ist bevorzugt (C₁-C₁₂-Alkyl)cyclopentyl oder-cyclohexyl, z.B. Methyl- oder Ethylcyclopentyl oder-cyclohexyl.

Besonders bevorzugt stehen R₇ bis R₁₀ für C₁-C₆-Alkyl.

Wenn X für Alkyl steht, so kann es sich um Methyl, Ethyl, n- oder i-Propyl, oder n-, i- oder t-Butyl handeln. Bevorzugt sind Methyl und Ethyl.

Wenn X für Alkoxy steht, so kann es sich um Methoxy, Ethoxy, n- oder i-Propoxy, oder n-, i- oder t-Butoyy handeln. Bevorzugt sind Methoxy und Ethoxy.

In einer bevorzugten Untergruppe stellt X Methyl, Ethyl, Methoxy, Ethoxy, CI oder Br dar.

Olefinmonomere, von denen sich die Struktureinheit -Z- der Formel II ableiten, sind in grosser Vielzahl bekannt. Bevorzugt handelt es sich um Ethylen, das unsubstituiert oder mit Halogen, OH, CN, Alkyl, Phenyl, Alkylphenyl, Alkoxyphenyl, Halogenphenyl, Hydroxyphenyl, Alkyl-hydroxy-phenyl, Alkoxy-hydroxy-phenyl, Chlor- oder Brom-hydroxy-phenyl, Alkoxy, Phenoxy, Alkylphenoxy, Benzyl, Benzyloxy, -OS(O)₂O⊖M⊕, -COO- ⊖M⊕, -COOR₅, -COAR₆-OH, -COAR₆-OS(O)₂⊖M⊕ oder -OCO-R₅ substituiert ist, worin M⊕ für H⊕, ein Alkalimetallkation oder ein Ammoniumkation steht, R₅ C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder(C₁-C₁₂-Alkyl)benzyl darstellt, R₆ für lineares oder verzweigtes C₂-C₁₈-Alkylen, Poly(C₂-C₆-oxaalkylen) mit 2 bis 6 Oxaalkyleneinheiten, C₅-C₈-Cycloalkyllen, Phenylen, Benzylen oder Xylylen steht, und Afür-O- oder-NH- steht.

R₅ kann lineares oder verzweigtes C₁-C₁₈-, bevorzugt C₁-C₁₂- und besonders C₁-C₆-Alkyl sein. R₅ stellt als Cycloalkyl besonders Cyclopentyl oder Cyclohexyl dar. Bei R₅ als (C₁-C₁₂-Alkyl)-cycloalkyl ist das Cycloalkyl besonders Cyclopentyl oder Cyclohexyl und die Alkylgruppe kann linear oder verzweigt sein und enthält bevorzugt 1 bis 6, besonders 1 bis 4 C-Atome. Bedeutet R₅ Alkylphenyl oder Alkylbenzyl, so kann die Alkylgruppe linear oder verzweigt sein und enthält bevorzugt 1 bis 6, besonders 1 bis 4 C-Atome.

R₆ enthält als Alkylen bevorzugt 2 bis 12, besonders bevorzugt 2 bis 8, und insbesondere bevorzugt 2 bis 6 C-Atome. Beispiele sind Ethylen und die Isomeren von Propylen, Butylen, Pentylen, Hexylen, Heptylen, Octylen, Nonylen, Decylen, Undecylen, Dodecylen, Tetradecylen, Hexadecylen und Octadecylen. Bevorzugt sind Ethylen, 1,2- und 1,3-Propylen, 1,2-, 1,3- und 1,4-Butylen, 1,2-, 1,3-, 1,4- und 1,5-Pentylen und 1,2-, 1,3-, 1,4-, 1,5- und 1,6-Hexylen.

R₆ in der Bedeutung von Poly(oxaalkylen) enthält bevorzugt 2 bis 4 Oxaalkyleneinheiten, und bevorzugt 2 bis 4, besonders bevorzugt 2 oder 3 C-Atome im Alkylenrest.

R₆ in der Bedeutung von Cycloalkylen stellt insbesondere Cyclopentylen oder Cyclohexylen dar.

In einer bevorzugten Ausführungsform bedeutet Z Struktureinheiten der Formel III 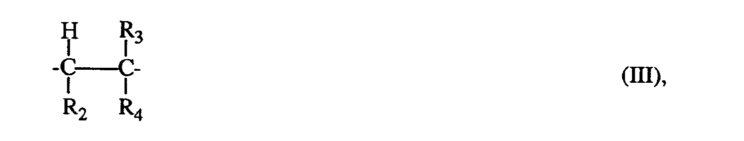 worin R₂ für H, C₁-C₆-Alkyl, -COOR₅ oder -COO⊖M⊕ steht, R₃ H, F, Cl, CN oder C₁-C₆-Alkyl bedeutet, R₄ H, F, Cl, CN, R₅-O-, C₁-C₁₂-Alkyl, -OH, -OS(O)₂O⊖M⊕, -COO⊖M⊕, -COOR₅, -COAR₆-OH, -COAR₆-OS(O)₂O⊖M⊕, -OCO-R₅, Phenyl oder mit-OH und/oderein oder zwei Methyl, Methoxy, CI oder Br substituiertes Phenyl darstellt, M⊕ für H⊕, ein Alkalimetallkation oder ein Ammoniumkation steht, R₅ C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder (C₁-C₁₂-Alkyl)benzyl darstellt, R₆ für lineares oder verzweigtes C₂-C₁₈-Alkylen, Poly(C₂-C₆-oxaalkylen) mit 2 bis 6 Oxaalkyleneinheiten, C₅-C₈-Cycloalkylen, Phenylen, Benzylen oder Xylylen steht, und A für -0- oder -NH- steht. A bedeutet bevorzugt -NH-.

R₂ steht bevorzugt für H. Bedeutet R₂ Alkyl, so handelt es sich bevorzugt um Methyl oder Ethyl. Bedeutet R₂-COOR₅, so stellt R₅ bevorzugt C₁-C₁₂-, besonders C₁-C₆-Alkyl dar.

Bedeutet R₃ Alkyl, so handelt es sich bevorzugt um C₁-C₄-Alkyl, z.B. Methyl, Ethyl, n-Propyl und n-Butyl. R₃ steht bevorzugt für H, CI oder C₁-C₄-Alkyl.

Bedeutet R₄ die Gruppe R₅-O-, so stellt R₅ bevorzugt C₁-C₁₂-, besonders C₁-C₆-Alkyl dar. Bedeutet R₄ Alkyl, so enthält es bevorzugt 1 bis 6, besonders 1 bis 4 C-Atome. Bedeutet R₄ die Gruppe -COOR₅, so stellt R₅ bevorzugt C₁-C₁₂-, besonders C₁-C₆-Alkyl, Cyclopentyl oder Cyclohexyl dar. Bedeutet R₄ die Gruppe -OCO-R₅, so stellt R₅ bevorzugt C₁-C₁₂-, besonders C₁-C₆-Alkyl, Phenyl oder Benzyl dar.

Wenn R₄ die Gruppen -COOR₆OH oder -COO-R₆-OS(O)₂O⊖M⊕ darstellt, so gelten die zuvor für R₆ angegebenen Bevorzugungen.

In einer bevorzugten Ausführungsform stehen R₂ für H, R₃ für H, F, Cl, Methyl oder Ethyl, und R₄ für -F, -CI, -CN, -OH, -OS(O)₂O⊖M⊕, C₁-C₄-Alkyl, C₁-C₆-Alkoxy, -COO-C₁-C₆-Alkyl, -COO-R₆-OH, -COO-R₆-OS(O)₂O⊖M⊕, -OOC-C₁-C₆-Alkyl, Phenyl, Methylphenyl, Dimethylphenyl, Chlorphenyl, Dichlorphenyl, Dibromphenyl, Methoxyphenyl, Dimethoxyphenyl, Hydroxyphenyl, oder mit ein oder zwei Methyl, Methoxy, CI und/oder Br substituiertes Phenyl, worin M⊕ Trialkylammonium mit 1 bis 4 C-Atomen in den Alkylgruppen bedeutet, und R₆ C₂-C₆-Alkylen darstellt.

In einer besonders bevorzugten Untergruppe enthalten die erfindungsgemässen Polymeren 25 bis 100 Mol-% Struktureinheiten der Formeln la, 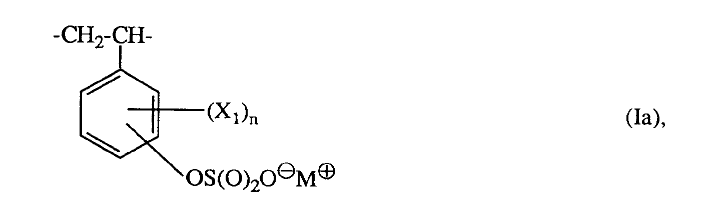
0 bis 75 Mol-% Strukrureinheiten der Formel Illa, 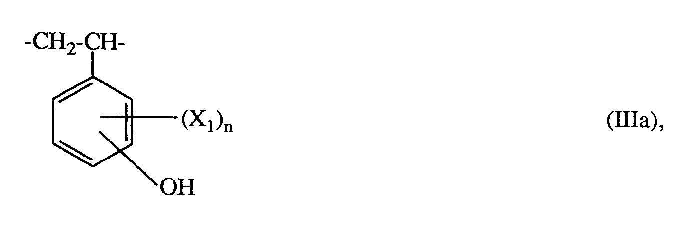
und 0 bis 75 Mol-% Strukrureinheiten der Formel Illb, 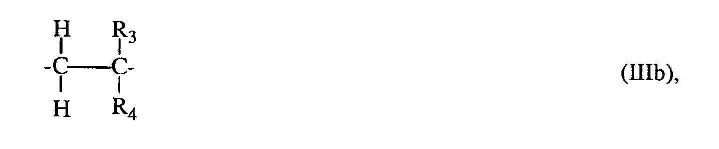 wobei sich die Molprozente zu 100 Mol-% addieren, R₃ für H oder Methyl steht, R₄ H, C₁-C₄-Alkyl, Phenyl, Toluoyl, -CI, -F, -CN, C₁-C₄-Alkoxy, -COOM⊕, -COO-C₁-C₆-Alkyl oder-OCO-C₁-C₆-Alkyl darstellt, X₁ Methyl, CI oder Br bedeutet, n für 0, 1 oder 2 steht, und M die zuvor angegebenen Bedeutungen hat, einschliesslich der Bevorzugungen. Die Gruppe -OS(O)₂O⊖M⊕ in Formel la und die OH-Gruppe in Formel Illa sind bevorzugt in Parastellung zur CH-Gruppe gebunden.

Ganz besonders bevorzugt sind Polymere mit Struktureinheiten der Formel IIIb, worin R₃ H oder Methyl bedeutet und R₄ für Methyl, Ethyl, Phenyl, -COOCH₃ oder -COOC₂H₅ stehen.

Bei den erfindungsgemässen Copolymeren kann es sich um Blockpolymere oder um Copolymere mit einer statistischen Verteilung der Struktureinheiten handeln.

Die erfindungsgemässen Polymere sind in bekannter Weise erhältlich, indem man in einem inerten Lösungsmittel ein Polymer mit 5 bis 100 Mol-% Struktureinheiten der Formel IV, 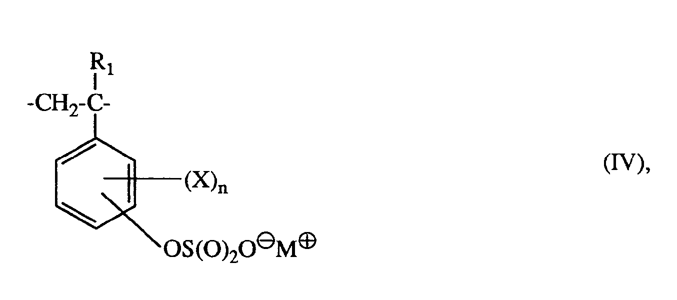
und 0 bis 95 Mol-% Struktureinheiten der Formel Ila, 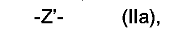
worin R₁, X, M und n die zuvor angegebenen Bedeutungen haben, und Z' der Rest eines Olefinmonomeren mit Ausnahme von Struktureinkeiten der Formel IV darstellt, mit SO₃ umsetzt, danach die Reaktionsmischung mit einer Alkalimetall- oder Ammoniumbase neutralisiert und das Polymere isoliert.

Das Verfahren ist an sich bekannt und zum Beispiel in der US-A-5 061401 beschrieben. Das SO₃ kann z.B. als Gas in die Reaktionslösung eingeleitet werden. Bevorzugt wird ein Pyridin/SO₃-Komplex verwendet, der kommerziell erhältlich ist.

Geeignete inerte Lösungsmittel sind besonders polare aprotische Lösungsmittel, wobei sich die Wahl des Lösungsmittels hauptsächlich nach der Löslichkeit der Hydroxylgruppen enthaltenden Polymeren richtet. Die Lösungsmittel können alleine oder in Mischung aus mindestens 2 Lösungsmitteln verwendetwerden. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan,1,1,1-Trichlorethan, 1,1,2,2-Tetrachlorethan, und Lactone wie y-Butyrolacton, δ-Valerolacton und Pivalolacton, N-alkylierte Carbonsäureamide und Lactame wie N,N-Dimethylformamid, N,N-Diethylformamid, N,N-Dimethylacetamid, N,N-Diethylacetamid, N-Methyl-y-butyrolactam, N-Methyl-s-caprolactam, N-Methylpyrrolidon, N-Acetylpyrrolidon, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Dichlorbenzol, 1,2,4-Trichlorbenzol, Nitrobenzol.

Die Reaktionstemperatur beträgt z.B. 10 bis 150°C, vorzugsweise 20 bis 100°C. Die Reaktionszeit beträgt etwa 5 bis 10 Stunden. Nach Beendigung der Reaktion wird bei Verwendung von SO₃-Gas mit einer wässrigen Lösung von Alkalimetallbasen oderAmmoniumhydroxid, oder wässrigen oder organischen Lösungen von Aminhydroxiden neutralisiert. Bei Verwendung von Amin/SO₃-Komplexen, z.B. einem Pyridin/SO₃-Komplex, werden die entsprechenden Ammoniumsalze gebildet, die direkt verwendet oder in denen die Ammoniumgruppen mit stärkeren Basen ersetzt werden können. Die Salze der sulfatierten Polymeren werden im allgemeinen mit Wasser ausgefällt. Das Polymer wird dann abfiltriert und kann zur Reinigung mit Wasser oder einem organischen Nichtlösungsmittel gewaschen und darauf getrocknet werden.

Die erfindungsgemässen Polymeren eignen sich hervorragend als polymere Anionen in Zusammensetzungen mit kationischen Polyheteroaromaten oder Polyanilinen.

Ein weiterer Gegenstand der Erfindung ist eine Zusammensetzung aus a) mindestens einem Polyheteroaromaten odereinem Anilin in oxidierter, polykationischer Form, und b) mindestens einem Polyanion eines Polymeren mit, bezogen auf das Polymer, 5 bis 10 Mol-% gleichen oder verschiedenen Struktureinheiten der Formel I, 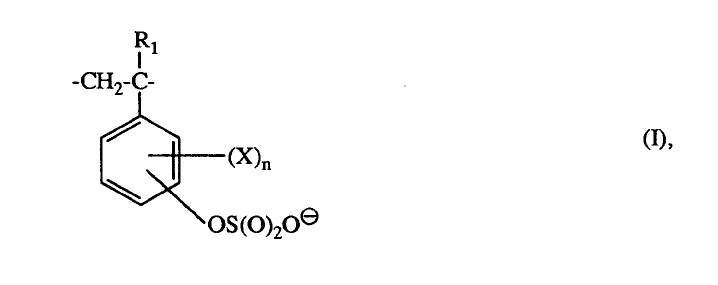 und 0 bis 95 Mol-% gleichen oder verschiedenen Struktureinheiten der Formel II, 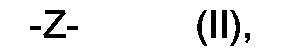
worin n für 0 oder die Zahlen 1 oder 2 steht, X C₁-C₄-Alkyl, C₁-C₄-Alkoxy, CI oder Br steht, R₁ H oder Methyl bedeutet, und Z den Rest eines Olefinmonomeren darstellt.

Für die Polymeren in dieser Zusammensetzung gelten die gleichen Bevorzugungen, wie sie zuvor angegeben worden sind. Die Zusammensetzung enthält pro Struktureinheit des Polyheteroaromaten a) bevorzugt 0,1 bis 0,5, besonders bevorzugt 0,2 bis 0,4 Struktureinheiten des Polymers b).

Unter Polyheteroaromaten werden im Rahmen dieser Erfindung Homo- und Copolymere verstanden, die wiederkehrende heteroaromatische Struktureinheiten enthalten. Sie können höhermolekular oder auch oligomer sein, sofern sie bei Raumtemperatur fest sind und Filme zu bilden vermögen. Bevorzugt sind Polyheteroaromaten aus 5- oder 6-gliedrigen Ringen, die 1 bis 3, bevorzugt 1 Heteroatom aus der Grupe -O-, -S- und -N- enthalten, und deren C-Atome unsubstituiert oder mit C₁-C₁₆-Alkyl oder C₁-C₁₆-Alkoxy, besonders C₁-C₁₂-Alkyl oder C₁-C₁₂-Alkoxy substituiert sind. Vorzugsweise sind 2 C-Atome nicht substituiert, um die elektrochemische bzw. chemische Polymerisarion durchführen zu können. Der 5- oder 6-gliedrige Ring ist bevorzugt ausgewählt aus der Gruppe Pyrrol, Thiophen, Furan, 2,2'-Bipyrrol, 2,2'-Bithiophen, 2,2'-Bifuran, Thiazol, Oxazol, Thiadiazol und Imidazol.

Besonders bevorzugt ist der Polyheteroaromat aus einem Pyrrol der Formel 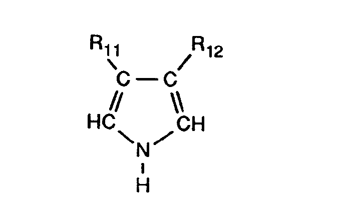
gebildet, worin R₁₁ und R₁₂ unabhängig voneinander H oder C₁-C₁₆-Alkyl, C₁-C₁₆-Alkoxy oder R₁₁ und R₁₂ zusammen Tri- oder Tetramethylen bedeuten. R₁₁ und R₁₂ können z.B. für C₁-C₁₂-Alkyl oder C₁-C₁₂-Alkoxy, wie z.B. für Methyl, Methoxy oder Ethyl bzw. Ethoxy stehen, und stellen besonders H dar. Die NH-Gruppe des Pyrrols kann mit C₁-C₁₂-Alkyl, besonders C₁-C₆-Alkyl substituiert sein. R₁₁ und R₁₂ zusammen können auch für Tri- oder Tetramethylen stehen.

Als Aniline sind z.B. Anilin selbst und in 3-Stellung mit C₁-C₁₂-Alkyl oder C₁-C₁₂-Alkoxy, bevorzugt C₁-C₆-Alkyl oder C₁-C₆-Alkoxy substituiertes Anilin geeignet.

Die erfindungsgemässen Zusammensetzungen werden in an sich bekannter Weise hergestellt, indem man
a) in einer organischen, wässrig-organischen oder wässrigen Lösung einen Heteroaromaten oderein Anilin in Gegenwart eines erfindungsgemässen polymeren Salzes elektrochemisch polymerisiert und danach die Zusammensetzung von der Anode entfernt oder
b) einen Heteroaromaten oder ein Anilin in Gegenwart eines erfindungsgemässen polymeren Salzes und eines inerten Lösungsmittels mit einem Oxidationsmittel umsetzt.

Die Zusammensetzung kann je nach den Reaktionsbedingungen als Pulver oder als Film erhalten werden. Das Verfahren b) wird vorteilhaft zur Herstellung eines pulverförmigen Materials und die Verfahrensstufe a) zweckmässig zur Herstellung eines filmförmigen Materials verwendet.

Geeignete Oxidationsmittel sind z.B. Peroxide und Persulfate, besonders H₂0₂, K₂S₂O₈ und (NH₄)₂S₂O₈ , sowie Eisen(III)-Verbindungen und Kupfer(II)-Verbindungen, besonders FeCl₃ und CuCI₂.

Die Elektrolyse kann potentiostatisch oder galvanostatisch durchgeführt werden. Als Anodenmaterial eignen sich z.B. inerte Metalle (Titan, Nickel, Platin, Stahl) oder ITO-Glas, oder auch nicht inerte Metalle wie z.B. Aluminium (siehe DE-A-3 906 563). Die Stromdichte kann z.B. 0,5-50, bevorzugt 2 bis 50 und besonders bevorzugt 2 bis 20 mA/cm² betragen. Ein geeignetes Anodenmaterial sind auch Bürstenelektroden.

Die Konzentration an polymeren Salzen kann 0,01 bis 1 Mol/I, bevorzugt 0,05 bis 0,5 Mol/I betragen, bezogen auf die Reaktionsmischung. Die Konzentration an Heteroaromaten oder einem Anilin kann 0,01 bis 10 Vol.%, besonders 0,1 bis 5 Vol.% betragen, bezogen auf das Volumen der Reaktionsmischung.

Geeignete organische Lösungsmittel sind zuvor erwähnt worden. Bevorzugte Lösungsmittel sind Alkohole, z.B. Alkanole mit 1 bis 12 C-Atomen, die mit C₁-C₄-Alkoxy substituiert sein können. Beispiele sind Methanol, Ethanol, n- und i-Propanol, n-, i- und t-Butanol, Pentanol, Hexanol, Heptanol, Octanol, Decanol, Dodecanol, Methoxyethanol, Ethoxyethanol, Diethylenglykolmonomethyl- oder -monoethylether, 1-Methoxypropan-2-oder -3-ol.

Die Bildung von pulverförmigen Abscheidungen auf der Elektrode kann durch die Elektrolysebedingungen und besonders durch die Wahl des Lösungsmittels bestimmt werden. Die Gegenwart polarer protischer Lösungsmittel alleine oder in Mischung mit polaren Lösungsmitteln fördert die Bildung von Pulvern.

Eine bevorzugte Ausführungsform des Verfahrens ist dadurch gekennzeichnet, dass die Polymerisation in Gegenwart eines polaren protischen Lösungsmittels, bevorzugt in Gegenwart von Alkoholen durchgeführt wird, wobei M⊕ für ein Ammoniumkation mit mindestens einer organischen Gruppe steht. Besonders steht M⊕ hierbei für R₁₃R₁₄R₁₅R₁₆N⊕ worin R₁₃ bis R₁₆ unabhängig voneinander unsubstituiertes oder Hydroxyl-substituiertes C₁-C₁₈-Alkyl, Phenyl, (C₁-C₁₂-Alkyl)phenyl, (C₁-C₁₂-Alkyl)benzyl, C₅-C₇-Cycloalkyl, (C₁-C₁₂-Alkyl)-C₅-C₇-cycloalkyl darstellen, oder R₁₃ und R₁₄ zusammen Tetramethylen, Pentamethylen oder 3-Oxapentylen sind und R₁₅ und R₁₆ die zuvor angegebenen Bedeutungen haben. Insbesondere sind R₁₃ bis R₁₆ hierbei C₁-C₆-Alkyl, z.B. Methyl, Ethyl, n-Propyl und bevorzugt n-Butyl.

Die elektrochemische Polymerisation kann bei ausreichender Löslichkeit der Reaktanden auch in Wasser oderwässrig-organischer Lösung durchgeführt werden. Die Mitverwendung von Puffern ist zweckmässig. Geeignete Puffer sind z.B. Alkylammoniumphosphate mit 1 bis 3, besonders 2 oder 3 Alkylresten in der Ammoniumgruppe, die 1 bis 6, besonders 1 bis 4 C-Atome enthalten können. Beispiele sind Trimethyl-, Triethyl-, Tri-n-propyl- und Tri-n-butylammoniumphosphat. Geeignete Puffer sind auch Kationenaustauscher in ihrer protonierten Form.

Der Reaktionsmischung können auch weitere Substanzen zugegeben werden, die sich auf der Anode mitabscheiden, z.B. anionische Weichmacher oder anionische Farbstoffe.

Nach beendeter Elektrolyse können die erfindungsgemässen Zusammensetzungen in Form von pulverigen Abscheidungen oder Filmen von der Anode gelöst und durch Auswaschen mit Lösungsmitteln gereinigt werden. Die Teilchengrössen des Pulvers kann z.B. von 1 bis 5000 µm, bevorzugt von 10 bis 3000 µm betragen. Die Teilchen weisen je nach Elektrolysebedingungen unterschiedliche Gestalt auf. Es kann sich um gegebenenfalls verwachsene Dendrite, Nadeln, Stäbchen, Fasern oder tropfenförmige Teilchen handeln. Die Filme können eine Dicke von 5 µm bis 0,3 cm, bevorzugt 10 µm bis 0,1 cm aufweisen.

Die Oxidation mit Eisen(III)-Verbindungen kann z.B. bei Temperaturen von -20°C bis 60°C, bevorzugt 0°C bis 40°C durchgeführt werden. Geeignete Lösungsmittel sind zuvor bei der Herstellung der polymeren Salze erwähnt worden. Sofern die Eisen(III)-Verbindungen, z.B. Eisensalze, in organischen Lösungsmitteln unlöslich sind, werden zweckmässig wasserlösliche Lösungsmittel in Abmischung mit Wasser eingesetzt. Geeignete wasserlösliche Lösungsmittel sind insbesondere C₁-C₁₂-, bevorzugt C₁-C₄-Alkanole, die mit C₁-C₄-Alkoxy substituiert sein können. Beispiele für Alkanole sind zuvor erwähnt worden.

Geeignete Eisen(III)-Verbindungen sind z.B. Eisen(III)-Komplexe oder p-Komplexsalze oder besonders Eisen(III)-Salze von anorganischen und organischen Säuren, wie z.B. HCI, HBr, HJ, H₂S0₄, HCI0₄, HN0₃, FS0₃H, CF₃S0₃H, Essigsäure und Propionsäure. Bevorzugt sind Eisen(III)-Halogenide, besonders Eisen(III)-chlorid. Neben Fe(III)-Salzen können auch andere Oxidationsmittel, wie Ammoniumperoxodisulfat und Cu(II)-Salze verwendet werden.

Die chemische Oxidationsmethode ist z.B. im Bull. Chem. Soc. Jpn. 62, S. 234-238 (1989) beschrieben. Die Reaktion verläuft schnell und die gewünschten Produkte fallen als schwarze Pulver aus, die abfiltriert werden und durch Auswaschen mit z.B. Wasser, NaOH oder beiden Mitteln gereinigt werden können. Sofern ionisches Chlorid enthalten ist, kann es durch Behandeln der Pulver mit Chlorsulfonsäure und nachfolgendes Waschen mit Wasser entfernt werden.Die Korngrösse der Pulverteilchen beträgt z.B. von 0,1 µm bis 100 µm, bevorzugt von 1 µm bis 10 µm.

Anstelle von Anilin kann bei der chemischen Oxidation auch das entsprechende, gegebenenfalls halboxidierte Polyphenylenamin, z.B. Poly(p-phenylenamin-imin) eingesetzt werden.

Die Pulver weisen bei Verwendung von Eisen(III)-Salzen einen geringen Anionenanteil aus dem Oxidationsmittel auf, selbst bei einem grossen Ueberschuss an Eisen(III)-Salzen im Vergleich zu anionischen Gruppen im Polyelektrolyten.

Bei den erfindungsgemässen Zusammensetzungen handelt es sich um schwarze rieselfähige und elektrisch leitende Pulver oder Filme, mit Glasumwandlungstemperaturen bis zu etwa 200°C und mehr, die thermoplastische Eigenschaften aufweisen und aus denen nach bekannten Pressverfahren einschliesslich Spritzpressen unter Ausübung von Druck Formkörper in beliebigerdreidimensionalerGestalt hergestellt werden können. Die Filme können auch nach Streckverfahren, zum Beispiel Tiefziehen, verarbeitet werden. Die mechanischen Eigenschaften von Filmen aus den erfindungsgemässen Zusammensetzungen können durch Verstrecken im Bereich der Glasumwandlungstemperaturen noch verbessert werden. Ein weiterer Gegenstand der Erfindung ist die Verwendung der erfindungsgemässen Zusammensetzungen zur Herstellung von elektrisch leitenden Formkörpern, z.B. von Stäben, Platten, Gehäusen und anderen Formteilen, die zur Abschirmung elektromagnetischer Felder oder als Elektroden eingesetzt werden können.

Die erfindungsgemässen Zusammensetzungen können in Form von Pulvern als Pressmassen verwendet werden. Die Pressmassen können bei niedrigen Temperaturen zu Sinterkörpern verarbeitet werden, die porös sein können. Bei Anwendung von hohem Druck und höheren Temperaturen, z.B. unterhalb der Zersetzungstemperaturen bis zum Bereich der Glasumwandlungstemperaturen, bevorzugt 60°C bis 150°C, sind die Pressmassen überraschend fliessfähig. Unter solchen Verarbeitungsbedingungen erhält man kompakte Formkörper mit glatten Oberflächen und guten mechanischen Eigenschaften, z.B. Biegefestigkeit, Bruchfestigkeit, Zugfestigkeit, Flexibilität und Zähigkeit.

Die Formkörper aus den erfindungsgemässen Zusammensetzungen weisen hohe elektrische Leitfähigkeiten auf, die bei Polyheteroaromaten im allgemeinen über 0,1 S/cm liegen. Die Leitfähigkeit kann durch Tempern von Formkörpern oder durch den Druck und/oder die Temperatur bei Formgebungsverfahren oder durch Verstreckung von Filmen beeinflusst werden. Sie weisen ferner wertvolle mechanische Eigenschaften auf.

Die Formkörper und Filme aus erfindungsgemässen Zusammensetzungen können z.B. als elektrische Leiter, Elektroden, Kathoden für Batterien, elektromagnetische Abschirmungsmaterialien, elektrisch leitende Stäbe, Sensoren, antistatisches Verpackungsmaterial oder elektrisch leitendes Versiegelungsmaterial verwendet werden.

Die pulverförmigen Zusammensetzungen können auch als elektrisch leitende Füllstoffe in Polymere eingearbeitet werden, z.B. in Mengen von 0,1 bis 90, vorzugsweise 5 bis 80 Gew.-%, bezogen auf den Kunststoff. Geeignete Kunststoffe, z.B. aus dem Bereich der Duroplaste, Thermoplaste und strukturell vernetzter Polymere sowie Einarbeitungsmethoden und die Verwendung von z.B. Verarbeitungshilfsmitteln, anderen Füllstoffen, Farbstoffen und Stabilisatoren sind dem Fachmann geläufig. Ein weiterer Gegenstand der Erfindung ist die Verwendung der pulverförmigen Pressmassen als elektrisch leitende Füllstoffe für Kunststoffe. Formkörper aus diesen gefüllten Kunststoffen können je nach Menge des elektrisch leitenden Füllstoffs z.B. als elektrische Leiter oder als Bauteile zur Abschirmung elektrischer und magnetischer Felder verwendet werden. Ein weiterer Gegenstand der Erfindung ist die Verwendung der erfindungsgemässen pulverförmigen Zusammensetzung als Füllstoff für natürliche und synthetische Kunststoffe.

Ein anderer Gegenstand der Erfindung ist eine Zusammensetzung aus
a) einem thermoplastischen, duroplastischen oder strukturell vernetzten Polymer, dem
b) ein elektrisch leitender feinteiliger Füllstoff aus einer pulverförmigen erfindungsgemässen Zusammensetzung einverleibt ist.

Die Menge der Komponente b) kann 0,1 bis 90 Gew.-%, bevorzugt 5 bis 80 Gew.-% betragen, bezogen auf die Komponente a). Bei einer Menge bis zu etwa 20 Gew.-% werden elektrische Leitfähigkeiten erzielt, die z.B. für eine antistatische Ausrüstung und die Abschirmung von elektrischen Feldern geeignet sind. Hohe elektrische Leitfähigkeiten und z.B. als elektrische Leitergeeignete Formkörperwerden bei Zusatzmengen von über 20 Gew.-%, bevorzugt mindestens 30 Gew.-% erhalten.

Als Kunststoffe eignen sich z.B.:
1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propyien-Buten-1-Copoiymere, Propylen-Isobutylen-Copolymere, Ethyien-Buten-1-Copoiymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.
3a. Kohlenwasserstoffharze (z.B. C₅-C₉) inklusive hydrierte Modifikationen davon (z.B. Klebrigmacherharze).
4. Polystyrol, Poly-(p-methylstyrol), Poly-(a-methylstyrol).
5. Copolymere von Styrol oder a-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder a-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA-oder AES-Polymere bekannt sind.
7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von a,ß-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oderAcrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
13. Polyphenylenoxide und -sulfide und deren Mischungen mit Styrolpolymeren oder Polyamiden.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylylendiamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Polym-phenylen-isophthalamid. Block-Copolymere der vorstehend genanntenPolyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oderABS modifizierte Polyamide oder Copolyamide; sowie während derverarbeitung kondensierte Polyamide ("RIM-Polyamidsysteme").
16. Polyharnstoffe, Polyimide, Polyamid-imide und Polybenzimidazole.
17. Polyester, die sich von Dicarbonsäuren und Dialkoholen und/odervon Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestern ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Der erfindungsgemässen Zusammensetzung können weitere Additive zur Verbesserung der Verarbeitungseigenschaften, der mechanischen, elektrischen und thermischen Eigenschaften, der Oberflächeneigenschaften und der Lichtstabilität einverleibt sein, zum Beispiel feinteilige Füllstoffe, Verstärkerfüllstoffe, Weichmacher, Gleit- und Entformungsmittel, Haftvermittler, Antioxidantien, Wärme- und Lichtstabilisatoren, Pigmente und Farbstoffe.

Die Herstellung dieser erfindungsgemässen Zusammensetzung kann nach in der Kunststofftechnik bekannten Verfahren erfolgen, zum Beispiel durch Vermischen des feinteiligen elektrisch leitenden Füllstoffs mit dem Kunststoff vor, während oder nach der Herstellung, durch Plastifizieren des Kunststoffs und Vermischen mit dem Füllstoff mittels Kalandrieren, Kneten, Extrudieren oder Spritzgiesen zur Herstellung von Granulaten oder Formkörpern. Es ist auch möglich, Kunststoffpulver mit dem Füllstoff trocken zu vermischen und dann zu formen, oder den Füllstoff in einer Kunststofflösung zu suspendieren, dann das Lösungsmittel zu entfernen und anschliessend zu verarbeiten.

Bei Duroplasten und strukturell vernetzten Polymeren wird der feinteilige Füllstoff zweckmässig vor der Formgebung und vor dem Härten bzw. Vernetzen zugesetzt, zum Beispiel durch gemeinsames Vermischen der Kunststoffkomponenten mit dem Füllstoff, wobei dieser zuvor einer Komponente einverleibt werden kann.

Diese erfindungsgemässe Zusammensetzung ist eine wertvolle Formmasse zur Herstellung antistatisch ausgerüsteter und elektrisch leitender Formteile aller Art, zum Beispiel Filme, Folien, Bänder, Fasern, Platten, Halbzeug, Formkörper und Gehäuse für Verwendungszwecke, wie sie zuvor erwähnt wurden. Hierbei können die für die Kunststoffverarbeitung üblichen Verfahren angewendet werden, zum Beispiel Kalandrieren, Spritzgiessen, Spritzpressen, Extrudieren, Tiefziehen, Press- und Sinterverfahren.

Der feinteilige elektrisch leitende Füllstoff ist thermoplastisch verformbar, besonders bei einer Verarbeitung unter Druck und erhöhter Temperatur. Solche Verarbeitungsverfahren sind daher bevorzugt, da hiermit im allgemeinen eine höhere elektrische Leitfähigkeit erzielt werden kann. Die Verträglichkeit mit den Basispolymeren kann über die Wahl des sulfatierten Polyanions beeinflusst werden. Polyanionen mit funktionellen Gruppen, z.B. Hydroxylgruppen, können zu Vernetzungen mit entsprechenden Basispolymeren (z.B. Epoxidharze) führen. Die Formteile weisen bei guten mechanischen Eigenschaften hohe und dauerhafte elektrische Leitfähigkeiten auf, die bei Verwendung von Polyheteroaromaten als Polykation im allgemeinen mindestens 0,01 S/cm betragen. Die Leitfähigkeit kann durch Nachtempern der Formteile erhöht werden.

Ein weiterer Gegenstand der Erfindung ist die Verwendung dieser erfindungsgemässen Zusammensetzung zur Herstellung von elektrisch leitenden Formteilen.

Die nachfolgenden Beispiele erläutern die Erfindung näher. Die Leitfähigkeit wird nach der Vierpunktmethode gemessen. Die Zugfestigkeit wird nach DIN 53455 und die Glasumwandlungstemperatur (Tg) nach der Differential-Scanning-Calometrie. Prozentangaben sind Gewichtsprozente, wenn nicht anders vermerkt.

### A) Herstellungsbeispiele für Polymere mit versalzten Sulfatgruppen.

Beispiel A1: Herstellung eines sulfatierten Poly(vinylphenols).

Zu einer Lösung von 7,39 g Poly-(p-vinylphenol) [mittleres Molekulargewicht 5200] in 15 ml Dimethylformamid (DMF) wird eine Lösung von 3,63 g Pyridin SOₛ-Kompiex in 15 ml DMF gegeben. Danach wird 24 h bei 40 °C unter einer N₂-Atmosphäre gerührt und dann auf 5 °c abgekühlt und 6 ml Tri-n-butylamin zugegeben. Die Reaktionsmischung wird auf Wasser gegossen und das ausgefallenen Polymer abfiltriert, mit Wasser gewaschen und dann im Vakuum bei 50 °c getrocknet. Man erhält 10,5 g des polymeren Salzes, das eine Tg von 131 °C aufweist. Durch Elementaranalyse wird ermittelt, dass 28 Mol-% der phenolischen OH-Gruppen umgesetzt sind.

### Beispiel A2: Herstellung eines sulfatierten Poly(vinylphenols).

Gemäss Beispiel A1 werden 24,0 g Poly-(p-vinylphenol) [mittleres Molekulargewicht 28000] in 40 ml DMF mit einer Lösung von 22,8 g Pyridin SO₃-Komptex in 80 ml DMF und 26 ml Tri-n-butylamin umgesetzt. Man erhält 45,7 g des polymeren Salzes mit 63 Mol-% umgesetzten phenolischen OH-Gruppen.

### Beispiel A3: Herstellung eines sulfatierten Copolymers aus p-Vinylphenol und Styrol.

Gemäss Beispiel A1 wird eine Lösung von 7 g Copolymer aus p-Vinylphenol und Styrol (1:0,79, mittleres Molekulargewicht 3600) in 10 ml DMF mit einer Lösung von 6,05g Pyridin SO₃-Komptex in 20 ml DMF und 16 ml Tri-n-butylamin umgesetzt. Man erhält 45,7 g des polymeren Salzes. Die Tg beträgt 78 °C und die Elementaranalyse ergibt 88 Mol-% umgesetzte phenolische OH-Gruppen.

### Beispiel A4: Herstellung eines sulfatierten Copolymers aus p-Vinylphenol und Methylmethacrylat.

Gemäss Beispiel A1 wird eine Lösung von 20,3 g Copolymer aus p-Vinylphenol und Methylmethacrylat (1:0,82, mittleres Molekulargewicht 9000) in 40 ml DMF mit einer Lösung von 17,0 g Pyridin SO₃-Komptex in 40 ml DMF und 10 ml Tri-n-butylamin umgesetzt. Man erhält 34,0 g des polymeren Salzes. Die Tg beträgt 58 °C und die Elementaranalyse ergibt 72 Mol-% umgesetzte phenolische OH-Gruppen.

### Beispiel A5: Herstellung eines sulfatierten Copolymers aus p-Vinyldibromphenol.

Gemäss Beispiel A1 wird eine Lösung von 13,4 g Polymer aus p-Vinyldibromphenol (mittleres Molekulargewicht 6000) in 25 ml DMF mit einer Lösung von 3.19 g Pyridin-S0₃-Komplex in 15 ml DMF und 6 ml Tri-n-butylamin umgesetzt. Man erhält 15,7 g des polymeren Salzes. Die Elementaranalyse ergibt 31 Mol-% umgesetzte phenolische OH-Gruppen.

### B) Anwendungsbeispiele

### Beispiel B1:

6,91 g Polymer gemäss Beispiel A1 werden mit 10 ml Pyrrol werden in einer Mischung aus 200 ml Propylencarbonat und 2 ml Wasser gelöst und mit Argon gespült. Dann wird die Lösung in eine Elektrolysezelle mit zwei rotierenden Nickelelektroden (Oberfläche 32 cm²) übergeführt. Nach einer Elektrolysedauer von 1,5 h bei einer Stromdichte von 2 A/cm² wird ein 80 µm dicker schwarzer Film von der Anode abgelöst, mit Ethanol gewaschen und dann im Vakuum bei 50 °C getrocknet. Die elektrische Leitfähigkeit beträgt 10,2 S/cm, die Zugfestigkeit beträgt 17 MPa und die Bruchdehnung 1 %. Das molare Verhältnis von Sulfatgruppen zu Pyrrolringen wird elementaranalytisch zu 0,23 bestimmt.

### Beispiel B2:

Es wird gemäss Beispiel B1 verfahren, aber 4,58 g Polymer gemäss Beispiel A2 verwendet und 2 h elektrolysiert. Man erhält einen 70 pm dicken schwarzen Film, der eine elektrische Leitfähigkeit von 14,3 S/cm, eine Zugfestigkeit von 48 MPa und eine Bruchdehnung von 2,5% aufweist. Das molare Verhältnis von Sulfatgruppen zu Pyrrolringen wird elementaranalytisch zu 0,33 bestimmt.

### Beispiel B3:

Es wird gemäss Beispiel B1 verfahren, aber 4,36 g Polymer gemäss Beispiel A3 verwendet. Man erhält einen 80 µm dicken schwarzen Film, der eine elektrische Leitfähigkeit von 9,7 S/cm, eine Zugfestigkeit von 26 MPa und eine Bruchdehnung von 4,0% aufweist. Das molare Verhältnis von Sulfatgruppen zu Pyrrolringen wird elementaranalytisch zu 0,29 bestimmt.

### Beispiel B4:

Es wird gemäss Beispiel B1 verfahren, aber 5,47 g Polymer gemäss Beispiel A2 verwendet und 2 h bei einer Stromdichte von 1 A/cm² elektrolysiert. Man erhält einen 36 µm dicken schwarzen Film, der eine elektrische Leitfähigkeit von 17,7 S/cm, eine Zugfestigkeit von 26 MPa und eine Bruchdehnung von 2,0% aufweist.

### Das molare Verhältnis von Sulfatgruppen zu Pyrrolringen wird elementaranalytisch zu 0,26 bestimmt.

### Beispiel B5:

Es wird gemäss Beispiel B1 verfahren, aber 11,7 g Polymer gemäss Beispiel A2 verwendet und 2 h bei einer Stromdichte von 2 A/cm² elektrolysiert. Man erhält einen 92 µm dicken schwarzen Film, der eine elektrische Leitfähigkeit von 4,0 S/cm, eine Zugfestigkeit von 19 MPa und eine Bruchdehnung von 2,0% aufweist. Das molare Verhältnis von Sulfatgruppen zu Pyrrolringen wird elementaranalytisch zu 0,26 bestimmt.

## Patentansprüche

1. Polymere mit, bezogen auf das Polymer, 5 bis 100 Mol-% gleichen oder verschiedenen Struktureinheiten der Formel I, 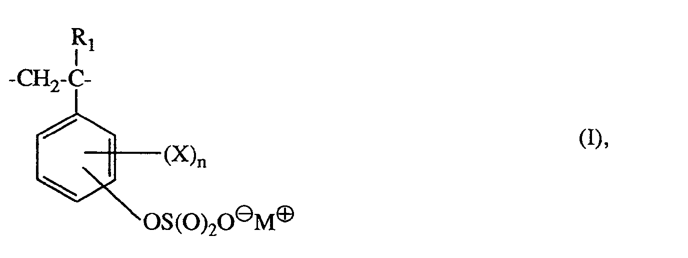
und 0 bis 95 Mol-% gleichen oder verschiedenen Struktureinheiten der Formel II, 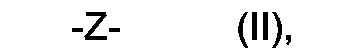
worin n für 0 oder die Zahlen 1 oder 2 steht, R₁ H oder Methyl bedeutet, M⊕ für H⊕, ein Alkalimetallkation oder ein Ammoniumkation steht, X C₁-C₄-Alkyl, C₁-C₄-Alkoxy, Cl oder Br darstellt, und Z einen von (I) verschiedenen Rest eines Olefinmonomeren darstellt.

2. Polymere gemäss Anspruch 1, dadurch gekennzeichnet, dass der Polymerisationsgrad des Polymers 5 bis 10 000 beträgt.

3. Polymere gemäss Anspruch 1, dadurch gekennzeichnet, dass das Polymer 10 bis 100 Mol-% Struktureinheiten der Formel und 90 bis 0 Mol-% Struktureinheiten der Formel II enthält.

4. Polymere gemäss Anspruch 3, dadurch gekennzeichnet, dass das Polymer 10 bis 95 Mol-% Struktureinheiten der Formel und 90 bis 5 Mol-% Struktureinheiten der Formel II enthält.

5. Polymere gemäss Anspruch 1, dadurch gekennzeichnet, dass R₁ in Formel für H steht.

6. Polymere gemäss Anspruch 1, dadurch gekennzeichnet, dass M⊕ für H, oder Alkalimetallkation für Li⊕, Na⊕ und K⊕ und als Ammoniumkation für NH₄⊕, ein protoniertes, primäres, sekundäres oder tertiäres Amin, oder quaternäres Ammonium oder Pyridinium steht.

7. Polymere gemäss Anspruch 6, dadurch gekennzeichnet, dass das primäre Ammonium 1 bis 18 C-Atome, das sekundäre Ammonium 2 bis 24, das tertiäre Ammonium 3 bis 30, und das quaternäre Ammonium 4 bis 36, enthält.

8. Polymere gemäss Anspruch 6, dadurch gekennzeichnet, dass in Formel IM⊕ Li⊕, Na^{B} oder K⊕ darstellt, oder R₇R₈R₉R₁₀N⊕ ist, worin R₇, R₈, Rg und R₁₀ unabgängig voneinander H, unsubstituiertes oder Hydroxyl-substituiertes C₁-C₁₈-Alkyl, Phenyl, (C₁-C₁₂-Alkyl )phenyl, (C₁-C₁₂-Alkyl)benzyl, C₅-C₇-Cycloalkyl, (C₁-C₁₂-Alkyl)-C₅-C₇-cycloalkyl darstellen, oder R₇ und R₈ zusammen Tetramethylen, Pentamethylen oder 3-Oxapentylen sind und Rg und R₁₀ die zuvor angegebenen Bedeutungen haben.

9. Polymere gemäss Anspruch 8, dadurch gekennzeichnet, dass R₇ bis R₁₀ für C₁-C₆-Alkyl stehen.

10. Polymere gemäss Anspruch 1, dadurch gekennzeichnet, dass sich die Struktureinheit -Z- in Formel II von Ethylen ableitet, das unsubstituiert oder mit Halogen, OH, CN, Alkyl, Phenyl, Alkylphenyl, Alkoxyphenyl, Halogenphenyl, Hydroxyphenyl, Alkyl-hydroxy-phenyl, Alkoxy-hydroxy-phenyl, Chlor- oder Brom-hydroxy-phenyl, Alkoxy, Phenoxy, Alkylphenoxy, Benzyl, Benzyloxy, -OS(O)₂O⊖M⊕, -COO⊖M⊕, -COOR₅, -COAR₆-OH, -COAR₆-OS(O)₂O⊖M⊕ oder-OCO-R₅ substituiert ist, worin M⊕ für H⊕, ein Alkalimetallkation oder ein Ammoniumkation steht, R₅ C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder (C₁-C₁₂-Alkyl)benzyl darstellt, R₆ für lineares oder verzweigtes C₂-C₁₈-Alkylen, Poly(C₅-C₆-oxaalkylen) mit 2 bis 6 Oxaalkyleneinheiten, C₅-C₈-Cycloalkylen, Phenylen, Benzylen oder Xylylen steht, und A für -0- oder -NH- steht.

11. Polymere gemäss Anspruch 1, dadurch gekennzeichnet, dass die Struktureinheit -Z- der Formel III 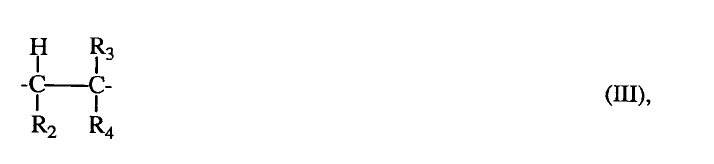
worin R₂ für H, C₁-C₆-Alkyl, -COOR₅ oder -COO⊖M⊕ steht, R₃ H, F, Cl, CN oder C₁-C₆-Aikyi bedeutet, R₄ H, F, Cl, CN, R₅-O-, C₁-C₁₂-Alkyl, -OH, -OS(O)₂O⊖M⊕, -COO⊖M⊕, -COOR₅, -COAR₆-OH, -COAR₆-OS(O)₂O⊖M⊕, -OCO-R₅, Phenyl oder mit -OH und/oder ein oder zwei Methyl, Methoxy, Cl oder Br substituiertes Phenyl darstellt, M⊕ für H⊕, ein Alkalimetallkation oder ein Ammoniumkation steht, R₅ C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder(C₁-C₁₂-Alkyl)benzyl darstellt, R₆ für lineares oder verzweigtes C₂-C₁₈-Alkylen, Poly(C₂-C₆-oxaalkylen) mit 2 bis 6 Oxaalkyleneinheiten, C₅-C₈-Cycloalkylen, Phenylen, Benzylen oder Xylylen steht, und Afür-0- oder-NHsteht.

12. Polymere gemäss Anspruch 11, dadurch gekennzeichnet, dass R₂ in Formel III für H steht.

13. Polymere gemäss Anspruch 11, dadurch gekennzeichnet, dass R₃ in Formel III für H, CI oder C₁-C₄-Alkyl steht.

14. Polymere gemäss Anspruch 11, dadurch gekennzeichnet, dass R₄ in Formel I F, -CI, -CN, -OH, -OS(O)₂O⊖M⊕, C₁-C₄-Alkyl, C₁-C₆-Alkoxy, -COO-C₁-C₆-Alkyl, -COO-R₆-OH, -COO-R₆-OS(O)₂O⊖M⊕, -OOC-C₁-C₆-Alkyl, Phenyl, Methylphenyl, Dimethylphenyl, Chlorphenyl, Dichlorphenyl, Dibromphenyl, Methoxyphenyl, Dimethoxyphenyl, Hydroxyphenyl, oder mit ein oder zwei Methyl, Methoxy, CI und/oder Br substituiertes Phenyl,worin M⊕ Trialkylammonium mit 1 bis 4 C-Atomen in den Alkylgruppen bedeutet, und R₆ C₂-C₆-Alkylen darstellt.

15. Polymere gemäss Anspruch 11, dadurch gekennzeichnet, dass R₂ für H, R₃ für H, F, Cl, Methyl oder Ethyl, und R₄ für-F, -CI, -CN, -OH, -OS(O)₂O⊖M⊕, C₁-C₄-Alkyl, C₁-C₆-Alkoxy, -COO-C₁-C₆-Alkyl, -COO-R₆-OH, -COO-R₆-OS(O)₂O⊖M⊕, -OOC-C₁-C₆-Alkyl, Phenyl, Methylphenyl, Dimethylphenyl, Chlorphenyl, Dichlorphenyl, Dibromphenyl, Methoxyphenyl, Dimethoxyphenyl, Hydroxyphenyl, oder mit ein oder zwei Methyl, Methoxy, CI und/oder Br substituiertes Phenyl,worin M⊕ Trialkylammonium mit 1 bis 4 C-Atomen in den Alkylgruppen bedeutet, und R₆ C₂-C₆-Alkylen darstellt.

16. Polymere gemäss Anspruch 1, dadurch gekennzeichnet, dass 25 bis 100 Mol-% Struktureinheiten der Formeln la, 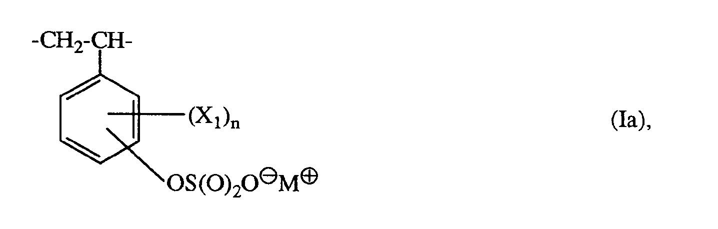
0 bis 75 Mol-% Strukrureinheiten der Formel Illa, 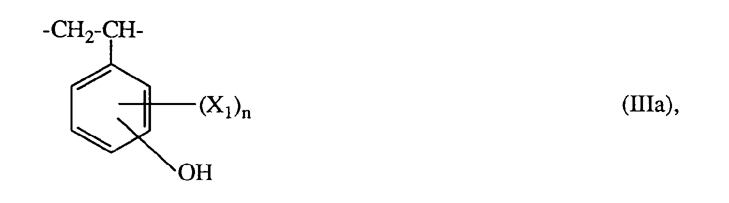
und 0 bis 75 Mol-% Strukrureinheiten der Formel Illb, 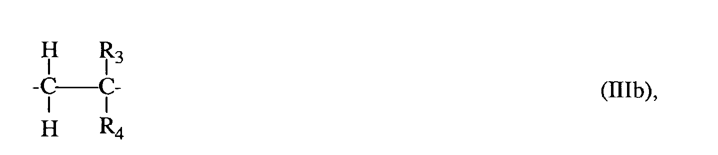
wobei sich die Molprozente zu 100 Mol-% addieren, R₃ für H oder Methyl steht, R₄ H, C₁-C₄-Alkyl, Phenyl, Toluoyl, -CI, -F, -CN, C₁-C₄-Alkoxy, -COOM⊕, COO-C₁-C₆-Alkyl oder -OCO-C₁-C₆-Alkyl darstellt, X₁ Methyl, CI oder Br bedeutet, n für 0, 1 oder 2 steht, und M⊕ die die in Anspruch 1 angegebenen Bedeutungen hat.

17. Polymere gemäss Anspruch 16, dadurch gekennzeichnet, dass die Gruppe -OS(O)₂O⊖M⊕ in Formel la und die OH-Gruppe in Formel Illa in Parastellung zur CH-Gruppe gebunden sind.

18. Verfahren zur Herstellung von Polymeren gemäss Anspruch 1, dadurch gekennzeichnet, dass man in einem inerten Lösungsmittel ein Polymer mit 5 bis 100 Mol-% Struktureinheiten der Formel IV, 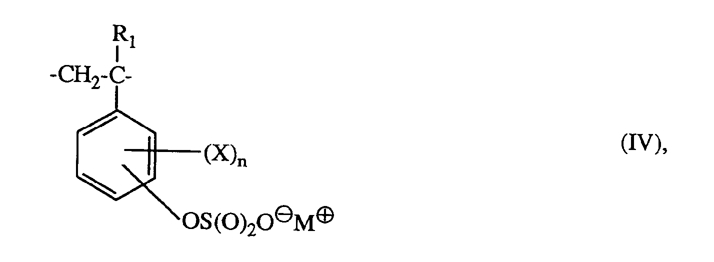
und 0 bis 95 Mol-% Struktureinheiten der Formel Ila, 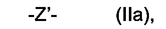
worin R₁, X, M⊕ und n die in Anspruch 1 angegebenen Bedeutungen haben, und Z' der Rest eines Olefinmonomeren mit Ausnahme von Struktureinkeiten der Formel IV darstellt, mit SO₃ umsetzt, danach die Reaktionsmischung mit einer Alkalimetall- oder Ammoniumbase neutralisiert und das Polymere isoliert.

19. Zusammensetzung aus a) mindestens einem Polyheteroaromaten oder einem Anilin in oxidierter, polykationischer Form, und b) mindestens einem Polyanion eines Polymeren mit, bezogen auf das Polymer, 5 bis 10 Mol-% gleichen oder verschiedenen Struktureinheiten der Formel I, 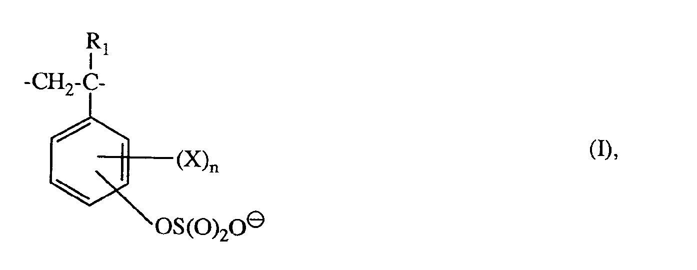
und 0 bis 95 Mol-% gleichen oder verschiedenen Struktureinheiten der Formel II, 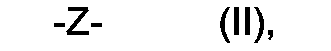 worin n für 0 oder die Zahlen 1 oder 2 steht, X C₁-C₄-Alkyl, C₁-C₄-Alkoxy, Cl oder Br steht, R₁ H oder Methyl bedeutet, und Z den Rest eines Olefinmonomeren darstellt.

20. Zusammensetzung gemäss Anspruch 19, worin der Polyheteroaromat aus 5- oder 6-gliedrigen Ringen gebildet ist, die 1 bis 3 Heteroatome aus der Gruppe 0, S und N enthalten, und deren C-Atome unsubstituiert oder mit C₁-C₁₆-Alkyl oder C₁-C₁₆-Alkoxy substituiert sind.

21. Zusammensetzung gemäss Anspruch 20, worin der Polyheteroaromat aus Heteroaromaten ausgewählt aus der Gruppe Pyrrol, Thiophen, Furan, 2,2'-Bipyrrol, 2,2'-Bithiophen, 2,2'-Bifuran, Thiazol, Oxazol, Thiadiazol und Imidazol gebildet ist.

22. Zusammensetzung gemäss Anspruch 20, worin der Polyheteroaromat aus einem Pyrrol der Formel 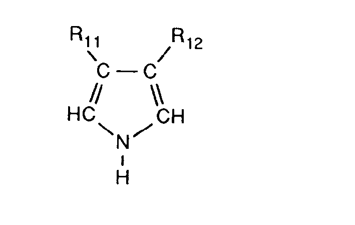
gebildet ist, worin R₁₁ und R₁₂ unabhängig voneinander H oder C₁-C₁₆-Alkyl, C₁-C₁₆-Alkoxy oder R₁₁ und R₁₂ zusammen Tri- oder Tetramethylen bedeuten.

23. Zusammensetzung gemäss Anspruch 19, worin der Polyheteroaromat aus Anilin oder in 3-Stellung mit C₁-C₁₂-Alkyl oder C₁-C₁₂-Alkoxy substituiertem Anilin gebildet ist.

24. Zusammensetzung gemäss Anspruch 19, worin pro Struktureinheit des Polyheteroaromaten a) 0,1-0,5 Struktureinheiten des Polymeren b) enthalten sind.

25. Zusammensetzung gemäss Anspruch 24, worin pro Struktureinheit des Polyheteroaromaten a) 0,2-0,4 Struktureinheiten des Polymeren b) enthalten sind.

26. Verfahren zur Herstellung einer Zusammensezung gemäss Anspruch 19, dadurch gekennzeichnet, dass man
a) in einer organischen, wässrig-organischen oder wässrigen Lösung einen Heteroaromaten oder ein Anilin in Gegenwart eines polymeren Salzes gemäss Anspruch 1 elektrochemisch polymerisiert und danach die Zusammensetzung von der Anode entfernt oder
b) einen Heteroaromaten oder ein Anilin in Gegenwart eines polymeren Salzes gemäss Anspruch 1 und eines inerten Lösungsmittels mit einem Oxidationsmittel umsetzt, und die ausgefallene Zusammensetzung isoliert.

27. Zusammensetzung aus
a) einem thermoplastischen, duroplastischen oder strukturell vernetzten Polymer, dem
b) ein elektrisch leitenderfeinteiliger Füllstoff aus einer pulverförmigen Zusammensetzung gemäss Anspruch 19 einverleibt ist.

28. Verwendung derZusammensetzung gemäss Anspruch 19 zur Herstellung von elektrisch leitenden Formkörpern.

29. Verwendung der Zusammensetzung gemäss Anspruch 19 in Form von Pulvern als elektrisch leitender Füllstoff für Kunststoffe.

30. Verwendung derZusammensetzung gemäss Anspruch 27 zur Herstellung von elektrisch leitenden Formteilen.
